# EUROPÄISCHE PATENTANMELDUNG

(11) **EP 4 060 838 A1**
(43) Veröffentlichungstag der Anmeldung: **21.09.2022**
(21) Anmeldenummer: 22158726.4
(22) Anmeldetag: 25.02.2022
(51) Int. Cl.: H02G 3/06, F16L 19/065

(54) **HALBVERSCHRAUBUNG**

(30) Priorität: 19.03.2021 DE 102021106864
(71) Anmelder: CENA Kunststoff GmbH, 35088 Battenberg (DE)
(72) Erfinder: LIESE, Ralf, 59909 Bestwig (DE)
(74) Vertreter: Dantz, Jan Henning

(57) **Zusammenfassung**

Eine Halbverschraubung (1) zur Montage an einer Wand (2) umfasst ein in eine Öffnung (3) der Wand (2) einfügbares Einsteckteil (4), das einen Gewindeabschnitt (40) aufweist und die Öffnung (3) mit mindestens einem Rasthaken (42) hintergreift, und eine auf den Gewindeabschnitt (40) aufgeschraubte Überwurfmutter (6), wobei in dem Einsteckteil (4) ein Sicherungsteil (5) eingefügt ist, mittels dem der mindestens eine Rasthaken (42) an einer Innenseite abstützbar ist. Dadurch lässt sich die Halbverschraubung (1) effektiv an einer Öffnung (3) der Wand (2) montieren.

## Beschreibung

Die vorliegende Erfindung betrifft eine Halbverschraubung zur Montage an einer Wand, mit einem in eine Öffnung der Wand einfügbaren Einsteckteil, das einen Gewindeabschnitt aufweist und die Öffnung mit mindestens einem Rasthaken hintergreift, und einer auf den Gewindeabschnitt aufgeschraubten Überwurfmutter, und eine Montageanordnung.

Die EP 2 735 779 A1 offenbart eine Vorrichtung zur abgedichteten Durchführung von Kabeln, wobei für die Montage ein Stutzen durch eine Öffnung einer Wand durchgesteckt wird und dann auf ein Gewinde des Stutzens eine Montagemutter aufgeschraubt wird, so dass eine Wand zwischen dem Stutzen und der Montagemutter festgeklemmt ist. An dem Stutzen wird dann ein Lamellenkorb mit einer Dichtung eingesteckt, wobei auf einen Gewindeabschnitt auf der zu der Wand gegenüberliegenden Seite eine Hutmutter aufgeschraubt wird. Eine solche Halbverschraubung besteht aus einer Vielzahl von Montageteilen und ist aufwändig in der Herstellung und der Montage.

Die DE 10 2019 114 587 A1 offenbart eine Halbverschraubung zur Durchführung eines Kabels, bei der auf einen Stutzen eine Überwurfmutter aufschraubbar ist, um an dem Stutzen einen Klemmkörper mit einem Dichteinsatz zu fixieren. Eine solche Halbverschraubung ist allerdings nur montierbar, wenn an der Wand bereits ein Stutzen mit einem Gewindeabschnitt vorhanden ist.

EP 2 225 811 B1 offenbart eine Anschlussarmatur zur Durchführung eines Kabels mit einem durch eine Gehäusewandung durchsteckbaren Spannelement mit Widerlagerzungen, die an einer Innenseite durch eine als Hülse ausgebildete Sperre abgestützt sind. An einem Außengewinde des Spannelementes ist eine Schraubhülse aufgeschraubt, die einen Dichtungsring umgibt. An der Schraubhülse ist eine Überwurfmutter an einem Außengewinde aufgeschraubt.

Weitere Schraubverbindungen zeigen CN 13325604A und US 3,285,551.

Es ist daher Aufgabe der vorliegenden Erfindung, eine Halbverschraubung zur Montage an einer Wand zu schaffen, die leicht herzustellen und zu montieren ist.

Diese Aufgabe wird mit einer Halbverschraubung mit den Merkmalen des Anspruches 1 gelöst.

Bei der erfindungsgemäßen Halbverschraubung weist ein in eine Öffnung einer Wand einfügbares Einsteckteil einen Gewindeabschnitt und einen Rasthaken auf, der die Öffnung hintergreift, wobei in das Einsteckteil ein Sicherungsteil eingefügt ist, mittels dem der mindestens eine Rasthaken an einer Innenseite abstützbar ist. Für eine effektive Montage ist auf den Gewindeabschnitt des Einsteckteils die Überwurfmutter aufgeschraubt. Dadurch kann der mindestens eine Rasthaken beim Einstecken des Einsteckteils durch die Öffnung gebogen werden und dann den Rand der Öffnung hintergreifen, also an dem Rand mit einem Abschnitt auf der Rückseite der Wand in radiale Richtung hervorstehen, und ein Herausziehen des Einsteckteils verhindern. Falls eine Zugbelastung auf das Einsteckteil wirkt, sorgt das Sicherungsteil dafür, dass der mindestens eine Rasthaken sich nicht nach innen biegen kann, um das Einsteckteil zu lösen. Vielmehr ist das Einsteckteil über den mindestens einen Rasthaken an dem Rand der Öffnung gesichert.

Vorzugsweise weist das Einsteckteil über den Umfang verteilt eine Vielzahl von Rasthaken auf, beispielsweise zwischen drei und zehn Rasthaken. Jeder Rasthaken kann dabei einen biegbaren Abschnitt aufweisen und einen hakenförmigen Abschnitt, der einen Rand der Öffnung hintergreifen kann. Dadurch kann das Einsteckteil in der montierten Position auch hohe Zugkräfte aufnehmen.

Das Sicherungsteil kann einen zylindrischen Abschnitt aufweisen, der zumindest teilweise durch die Öffnung in der Wand durchgesteckt ist. Dadurch kann der mindestens eine Rasthaken, vorzugsweise alle Rasthaken, gleichzeitig durch den zylindrischen Abschnitt gesichert werden. Der zylindrische Abschnitt kann dabei im Wesentlichen die gleiche axiale Länge besitzen wie die Rasthaken, kann optional aber auch etwas kürzer ausgebildet sein, um diese Abzustützen und eine Biegung der Rasthaken zu verhindern.

In einer weiteren Ausgestaltung ist das Sicherungsteil mit einem Klemmelement versehen, das zwischen einem ringförmigen Abschnitt an der Überwurfmutter und dem Einsteckteil einklemmbar ist. Dadurch wird das Einsteckteil beim Aufschrauben der Überwurfmutter gesichert. Das Klemmelement kann aus einer Vielzahl von Stegen gebildet sein, die sich bezogen auf das Gewinde der Überwurfmutter in axiale Richtung erstrecken und in radiale Richtung geringfügig biegbar sind. Dadurch kann oder in den Stegen beispielsweise ein Dichtelement gehalten sein, das beim Verschrauben der Überwurfmutter eine Dichtfläche, insbesondere eine ringförmige Dichtfläche, zwischen Überwurfmutter und Sicherungsteil abdichtet.

Für eine Herstellung der Halbverschraubung mit nur wenigen Bauteilen kann der Gewindeabschnitt an dem Einsteckteil ein Außengewinde sein, insbesondere ein Außengewinde, das integral mit dem Einsteckteil ausgebildet ist. Dabei kann integral mit dem Einsteckteil auch eine kantige Profilierung ausgebildet sein, beispielsweise ein Sechskant, damit das Einsteckteil über ein Werkzeug gedreht oder gehalten werden kann.

Die Halbverschraubung dient vorzugsweise zur Durchführung von Kabeln oder Leitungen, wobei an dem Sicherungsteil vorzugsweise in axiale Richtung ein Schlitz ausgebildet ist, so dass das Sicherungsteil zum Einfügen des Kabels aufgebogen werden kann, um die Leitung in das Sicherungsteil einzufügen. Optional kann das Sicherungsteil auch hülsenförmig ohne Schlitz ausgebildet sein, um noch höhere Kräfte zum Sichern des mindestens einen Raststeges aufnehmen zu können.

Eine Halbverschraubung wird vorzugsweise bei einer Montageanordnung eingesetzt, bei der an einer Wand eines Gehäuses eine Öffnung vorgesehen ist, wobei die Gehäusewand beispielsweise aus einem Stahlblech hergestellt ist. Dann kann durch die Halbverschraubung mindestens ein Kabel oder eine Leitung durchgeführt sein, die durch die Halbverschraubung geschützt in das Gehäuse eingeführt werden kann.

Die Erfindung wird nachfolgend anhand mehrerer Ausführungsbeispiele mit Bezug auf die beigefügten Zeichnungen näher erläutert. Es zeigen:

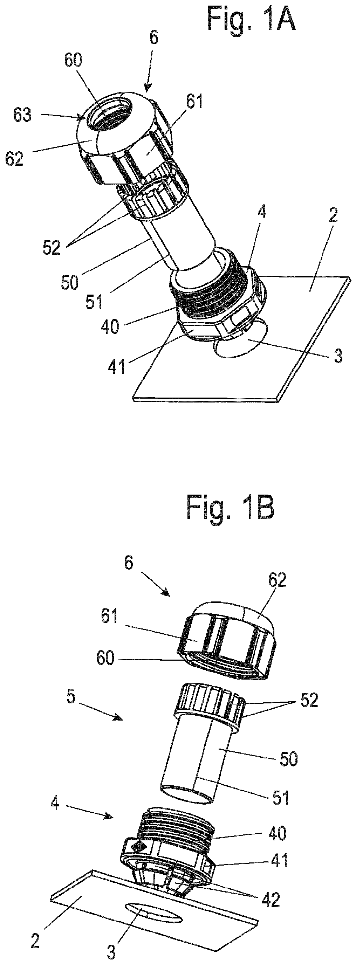

- Figuren 1A und 1B: zwei Explosionsansichten einer erfindungsgemäßen Halbverschraubung;
- Figuren 2A und 2B: zwei perspektivische Ansichten der Halbverschraubung der Figur 1 in einer montierten Position;
- Figur 3: eine perspektivische Ansicht einer Halbverschraubung vor der Montage;
- Figur 4: eine Ansicht der Halbverschraubung der Figur 3 bei der Montage, und

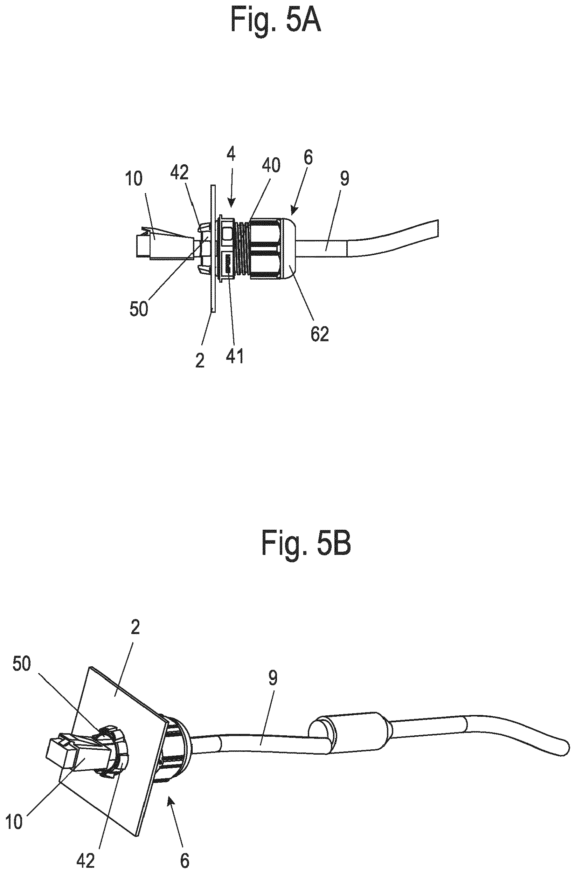

- Figuren 5A und 5B: zwei Ansichten der montierten Halbverschraubung.

Eine Halbverschraubung 1 wird an einer Wand 2 montiert, an der eine Öffnung 3, insbesondere eine kreisförmige Öffnung, ausgebildet ist. Die Wand 2 kann beispielsweise aus Stahlblech oder Kunststoff hergestellt sein und Teil eines Gehäuses sein.

An der Wand 2 wird ein Einsteckteil 4 montiert, das auf einer Seite einen äußeren Gewindeabschnitt 40 und auf der gegenüberliegenden Seite über den Umfang verteilt mehrere Rasthaken 42 aufweist, die in radiale Richtung geringfügig biegbar sind und einen verdickten Kopf- oder Hakenabschnitt aufweisen, der in der montierten Position die Wand 2 an der Öffnung 3 hintergreift. Zwischen dem Gewindeabschnitt 40 und dem Rasthaken 42 ist eine Profilierung 41 als Mehrkant ausgebildet, um das Einsteckteil 4 über ein Werkzeug drehen oder fixieren zu können. Das Einsteckteil 4 ist einteilig aus Metall oder Kunststoff hergestellt, kann aber auch aus mehreren Bauteilen hergestellt werden.

Die Halbverschraubung 1 umfasst ferner ein Sicherungsteil 5, das einen zylindrischen Abschnitt 50 aufweist, an dem optional ein Schlitz 51 in Längsrichtung vorgesehen ist. Ferner umfasst das Sicherungsteil 5 einen Käfig, der aus einer Vielzahl von axial ausgerichteten Stegen 52 gebildet ist, die an einem freien Ende in eine Überwurfmutter 6 eingefügt sind. Die Überwurfmutter 6 umfasst ein Innengewinde 60 und eine mehrkantige Profilierung 61 am äußeren Umfang. Auf der von der Wand 2 abgewandten Seite ist die Überwurfmutter 6 mit einem ringförmigen Abschnitt 62 versehen, der radial nach innen gewandt ist und an dem die freien Enden der Stege 52 des Sicherungsteils 5 anliegen. Innerhalb des ringförmigen Abschnittes 62 ist eine Öffnung 63 zur Durchführung von Kabel oder Leitungen ausgebildet.

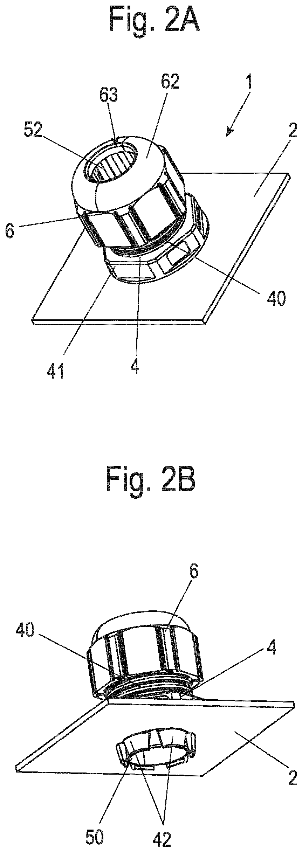

In den Figuren 2A und 2B ist die Halbverschraubung 1 in einer montierten Position an der plattenförmigen Wand 2 gezeigt. Die Rasthaken 42 durchgreifen die Öffnung 3 und liegen mit einem hakenförmigen Abschnitt an einem Rand um die Öffnung 3 an. Um ein Biegen der Rasthaken 42 nach innen zu verhindern, ist an der Innenseite der Rasthaken 42 der zylindrischer Abschnitt 50 angeordnet, der ebenfalls durch die Öffnung 3 durchgesteckt ist und sich in axiale Richtung nahezu über die gleiche Länge erstreckt wie die Rasthaken 42 an der Rückseite der Wand 2. Die Überwurfmutter 6 ist auf den Gewindeabschnitt 40 des Einsteckteils 4 aufgeschraubt, und im Inneren der Überwurfmutter 6 sind die Stege 52 zwischen dem ringförmigen Abschnitt 62 und der Stirnseite des hülsenförmigen Abschnittes mit dem Gewindeabschnitt 40 eingeklemmt. Der zylindrischer Abschnitt 50 besitzt einen kleineren Außendurchmesser als der Ring, auf dem die Stege 52 angeordnet sind, so dass eine Stufe zum Fixieren des Sicherungsteils 5 vorgesehen ist.

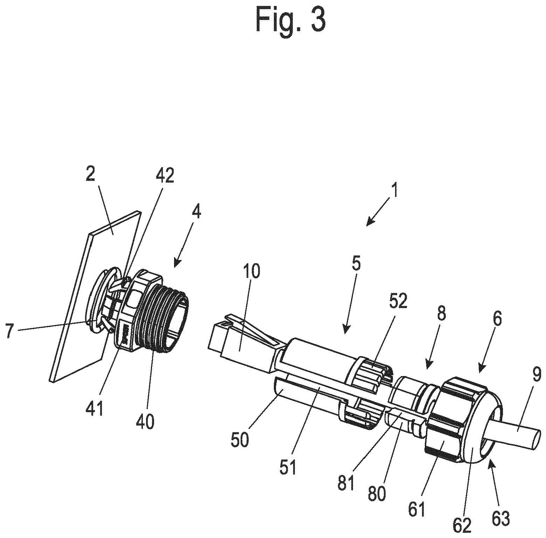

In Figur 3 ist die Halbverschraubung 1 vor der Montage gezeigt. Ein Kabel 9, insbesondere ein elektrisches Kabel, ist am Ende mit einem Stecker 10 versehen und soll durch die Wand 2 montiert werden. Zur Vermeidung von Flüssigkeitsschäden ist ein ringförmiges Dichtelement 7 vorgesehen, das an der Öffnung 3 montiert wird und zwischen dem Einsteckteil 4 und der Wand 2 angeordnet ist. Zur Montage werden die Rasthaken 42 durch die Öffnung 3 gesteckt, und das Dichtelement 7 ist an einer Oberfläche der Profilierung 41 anliegend angeordnet.

Das Kabel 9 wird in das Sicherungsteil 5 eingefügt, das einen axialen Schlitz 51 aufweist und somit aufgebogen werden kann, um das Kabel 9 darin einzulegen. Ferner ist ein ringförmiges Dichtelement 8 aus einem elastischen Material vorgesehen, das ebenfalls einen Schlitz 81 in einem zylindrischen Formkörper besitzt, so dass das Kabel 9 auch in das Dichtelement 8 eingefügt werden kann.

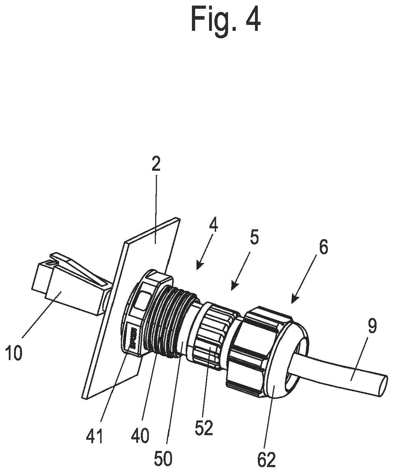

Für eine Montage wird der Stecker 10 durch die Öffnung 63 in der Überwurfmutter 6 durchgeführt und in das Dichtelement 8 und das Sicherungsteil 5 eingefügt. Das Einsteckteil 4 wird mit den Rasthaken 42 an der Wand fixiert, und der Stecker 10 wird durch das Einsteckteil 4 durchgeführt, wie dies in Figur 4 gezeigt ist. In dieser Position ist das Einsteckteil 4 vorfixiert, und das Sicherungsteil 5 wird mit dem zylindrischen Abschnitt 50 in das Einsteckteil 4 eingesteckt, bis ein endseitiger Abschnitt des zylindrischen Abschnittes 50 die Rasthaken 42 an einer Innenseite gegen eine Biegebewegung sichert. Eine Stirnseite des Gewindeabschnittes 40 liegt an der Stufe des Sicherungsteils 5 zwischen dem zylindrischen Abschnitt 50 und den Stegen 52 an. Nun wird die Überwurfmutter 6 auf den Gewindeabschnitt 40 aufgeschraubt, bis der ringförmige Abschnitt 62 das Dichtelement 8 und die Stege 52 kontaktiert. Dadurch kann eine Klemmung bewirkt werden, wobei der ringförmige Abschnitt 62 hierfür eine Anlaufschräge aufweisen kann, um die Stege 52 und das Dichtelement 8 radial nach innen vorzuspannen. Dadurch kann das Kabel 9 oder die Leitung im Wesentlichen abgedichtet durch die Wand 2 durchgeführt werden.

In dem dargestellten Ausführungsbeispiel weist das Einsteckteil 4 ein Außengewinde auf. Es ist auch möglich, eine Halbverschraubung zu schaffen, bei der das Einsteckteil 4 ein Innengewinde besitzt. Zudem ist das Einsteckteil 4 einteilig ausgebildet, kann aber auch aus mehreren Einzelteilen zusammengesetzt werden.

Zudem kann das Sicherungsteil statt einen axialen Schlitz 51 auch ohne Schlitz hergestellt werden, so dass ein Kabel oder eine Leitung in axiale Richtung durchgeführt werden müssen. Dadurch wird der zylindrische Abschnitt 50 noch stabiler und sichert die Rasthaken 42 gegen eine Verbiegung. Zudem können die Stege 52 auch durch eine andere Geometrie, beispielsweise einen Kragen, ersetzt werden, der dann ein Klemmelement zwischen der Überwurfmutter 6 und dem Einsteckteil 4 ausbildet.

### Bezugszeichenliste

- 1: Halbverschraubung
- 2: Wand
- 3: Öffnung
- 4: Einsteckteil
- 5: Sicherungsteil
- 6: Überwurfmutter
- 7: Dichtelement
- 8: Dichtelement
- 9: Kabel
- 10: Stecker
- 40: Gewindeabschnitt
- 41: Profilierung
- 42: Rasthaken
- 50: zylindrischer Abschnitt
- 51: Schlitz
- 52: Steg
- 60: Innengewinde
- 61: Profilierung
- 62: ringförmiger Abschnitt
- 63: Öffnung
- 81: Schlitz

## Patentansprüche

1. Halbverschraubung (1) zur Montage an einer Wand (2), mit einem in eine Öffnung (3) der Wand (2) einfügbaren Einsteckteil (4), das einen Gewindeabschnitt (40) aufweist und die Öffnung (3) mit mindestens einem Rasthaken (42) hintergreift, und einer auf den Gewindeabschnitt (40) aufgeschraubten Überwurfmutter (6), **dadurch gekennzeichnet, dass** in dem Einsteckteil (4) ein Sicherungsteil (5) eingefügt ist, mittels dem der mindestens eine Rasthaken (42) an einer Innenseite abstützbar ist.

2. Halbverschraubung nach Anspruch 1, **dadurch gekennzeichnet, dass** das Einsteckteil (4) über den Umfang verteilt eine Vielzahl von Rasthaken (42) aufweist.

3. Halbverschraubung nach Anspruch 1 oder 2, **dadurch gekennzeichnet, dass** das Sicherungsteil (5) einen zylindrischen Abschnitt (50) aufweist, der zumindest teilweise durch die Öffnung (3) in der Wand (2) durchgesteckt ist.

4. Halbverschraubung nach einem der vorhergehenden Ansprüche, **dadurch gekennzeichnet, dass** das Sicherungsteil (5) ein Klemmelement aufweist, das zwischen einem ringförmigen Abschnitt (62) der Überwurfmutter (6) und dem Einsteckteil (4) einklemmbar ist.

5. Halbverschraubung nach Anspruch 4, **dadurch gekennzeichnet, dass** das Klemmelement durch eine Vielzahl von Stegen (52) gebildet ist, die sich in axiale Richtung erstrecken.

6. Halbverschraubung nach Anspruch 5, **dadurch gekennzeichnet, dass** an oder in den Stegen (52) ein Dichtelement (8) gehalten ist.

7. Halbverschraubung nach einem der vorhergehenden Ansprüche, **dadurch gekennzeichnet, dass** der Gewindeabschnitt (40) an dem Einsteckteil (4) ein Außengewinde ist.

8. Halbverschraubung nach einem der vorhergehenden Ansprüche, **dadurch gekennzeichnet, dass** integral mit dem Einsteckteil (4) eine mehrkantige Profilierung (41) für den Eingriff eines Werkzeuges ausgebildet ist.

9. Halbverschraubung nach einem der vorhergehenden Ansprüche, **dadurch gekennzeichnet, dass** das Sicherungsteil (5) in axiale Richtung geschlitzt ausgebildet ist.

10. Montageanordnung mit einer Wand (2) eines Gehäuses mit einer Öffnung (3) an der eine Halbverschraubung (1) nach einem der vorhergehenden Ansprüche fixiert ist.

11. Montageanordnung nach Anspruch 10, **dadurch gekennzeichnet, dass** durch die Halbverschraubung (1) ein Kabel (9) oder eine Leitung durchgeführt ist.
